# EUROPEAN PATENT APPLICATION

(11) **EP 1 347 594 A2**
(43) Date of publication of application: **24.09.2003**
(21) Application number: 03251704.7
(22) Date of filing: 19.03.2003
(51) Int. Cl.: H04L 1/00

(54) **Streaming multimedia data over variable channels**

(30) Priority: 19.03.2002 KR 2002014847
(71) Applicant: SAMSUNG ELECTRONICS CO., LTD., Suwon-City, Kyungki-do (KR)
(72) Inventor: Park, Jeong-hoon, Seoul (KR)
(74) Representative: Geary, Stuart Lloyd

(57) **Abstract**

An apparatus and method to transmit a packet to provide a multimedia streaming service to one or more terminals connected through a network (30) includes a content producing unit (11), a content storing unit (12), and a packetizing unit (13). The content producing unit (11) encodes and compresses multimedia data into bit streams. The content storing unit (12) stores the bit streams compressed by the content producing unit. The packetizing unit (13) packetizes the bit streams stored in the content storing unit in a predetermined coding format, and packetizes the bit streams in a different coding format when a state of the network changes.

## Description

The present invention relates to a method of transmitting a multimedia stream, the method comprising packetizing encoded multimedia data and transmitting the packetized encoded multimedia data over a network and a multimedia streaming apparatus comprising packetizing means for packetizing encoded multimedia data and transmitting means for transmitting the packetized encoded multimedia data over a network.

Encoded contents are necessary to provide a multimedia data streaming service. Such contents or data are encoded in advance using authoring tools. The encoded data is stored in a database and transmitted to a plurality of terminals in response to requests therefrom.

The packet loss experienced by the different terminals may differ. Even in the case of terminals having channels having identical characteristics, variations may be occur over time. Accordingly, the problem of packet loss cannot be properly dealt with if the encoded contents are coded without considering the packet loss and streaming services are not normally provided until the channel returns to a normal state.

In general, video contents are coded in frame units in consideration of storage efficiency, and key frames are maintained in certain units among the coded frame units in consideration of packet loss.

Such key frames occupy large storage spaces, thereby reducing storage efficiency. Therefore, predictive frames, which can be predicted from the key frames, are coded between the key frames to improve the storage efficiency. The coded predictive frames and the key frames are packetized and transmitted. Here, the coded predictive frames and the key frames are divided into a plurality of packets and then transmitted via a network.

However, when packet loss occurs during the transmission of the coded predictive frames and the key frames, the loss of one packet is equivalent to the loss of one frame which includes a plurality of packets. As a result, the data must be restructured after reception of the succeeding key frame, and the video is frozen the screen.

An method according to the present invention is characterised by the packetizing means being responsive to a path quality signal to select different coding formats in dependence on path quality.

A multimedia streaming apparatus according to the present invention is characterised by means for determining the quality of a path through the network and the packetizing means being responsive to the path quality, determined by means for determining the quality of a path through the network, to select different coding formats in dependence on the determined path quality.

According to an aspect of the present invention, there is provided an apparatus and a method to transmit a packet for a multimedia streaming service which can improve storage efficiency and transmission efficiency by modifying a coding format of a packetizing process according to a state of a network, when a server provides the multimedia streaming service access to the Internet or wireless Internet and contents having same image quality are transmitted to a plurality of terminals.

According to an aspect of the present invention, there is provided an apparatus to transmit a packet to provide a multimedia streaming service to terminals connected through a network, including: a content producing unit encoding and compressing multimedia data into bit streams; a contents storing unit storing the bit streams compressed by the content producing unit; and a packetizing unit packetizing the bit streams stored in the contents storing unit in a predetermined coding format, and packetizing the bit streams in a different coding format when a state of the network changes.

According to another aspect of the present invention, there is provided an apparatus to transmit a packet to provide a multimedia streaming service to terminals connected through a network, including: a content producing unit encoding and compressing multimedia data into bit streams; a contents storing unit storing the bit streams compressed by the content producing unit; a network monitoring unit notifying changes of a state of the network connected to the terminals; and a packetizing unit packetizing the bit streams stored in the contents storing unit in a predetermined coding format, and packetizing the bit streams in a different coding format corresponding to the state of the network.

According to another aspect of the present invention, there is provided method of transmitting a packet to provide a multimedia streaming service to terminals connected through a network, including: informing of contents information comprising coding formats and playback time of contents, to the terminals; receiving a coding request from the terminals to perform a coding process in one of the coding formats according to a state of the network; and packetizing and transmitting bit streams in the requested coding format to the terminals.

According to another aspect of the present invention, there is provided a method of transmitting a packet to provide a multimedia streaming service to terminals connected through a network, including: packetizing bit streams in a different coding format when a state of the network connected to the terminals changes, and confirming whether the different coding format is a coding format to enable the bit streams to be decoded in the terminals; and generating and transmitting packets in the different coding format when the different coding format enables the data to be decoded in the terminals.

According to an aspect of the present invention, there is provided a packet transmitting method to connect to one or more terminals and to provide a multimedia streaming service to the connected terminals. The packet transmitting method according to an aspect of the present invention includes packetizing a packet to be transmitted having a descriptor field that describes a coding format of an inner payload; generating the packet according to another coding format; and transmitting the generated packet.

According to an aspect of the present invention, there is provided a packet receiving method to connect to one or more terminals and to provide a multimedia streaming service to the connected terminals. The packet receiving method according to an aspect of the present invention includes receiving a packet having a descriptor field describing a coding format of an inner payload, wherein the received packet is packetized in another coding format; and decoding where the packet in another coding format is de-packetized.

More specifically, the another coding format is a coding format without a data partitioning to deal with packet loss, or a coding format applied with the data partitioning to deal with the packet loss.

According to an aspect of the present invention, there is provided an apparatus to transmit a packet for a multimedia streaming service to improve storage efficiency and transmission efficiency of terminals connected to a server through a network, including: a packetizing unit modifying a coding format of a packetizing process according to a state of the network; and a server providing the multimedia streaming service access to the Internet or wireless Internet and transmitting contents having same image quality to the terminals.

According to an aspect of the present invention, there is provided a method of transmitting a packet to provide a multimedia streaming service to terminals connected to a server through a network, including: transmitting a describe command from the terminals to the server to obtain contents information; transmitting the contents information from the server to the terminals; packetizing and transmitting bit streams in a coding format from the server to the terminals; decoding the bit streams in a format corresponding to the coding format; modifying the coding format into a packet resilient coding format to be resilient from a packet loss; packetizing the bit streams in the modified coding format; and transmitting the packetized bit streams to the terminals.

Additional advantages, aspects, and features of the invention will be set forth in part in the description which follows and in part will become apparent to those having ordinary skill in the art upon examination of the following or may be learned from practice of the invention. The aspects and advantages of the invention may be realized and attained as particularly pointed out in the appended claims.

Embodiments of the present invention will now be described, by way of example, with reference to the accompanying drawings, in which:
Figure 1 shows a first apparatus according to the present invention connected to a network;
Figure 2 is a flowchart illustrating a first packet transmission method according to the present invention;
Figure 3 shows a second apparatus according to the present invention connected to a network; and

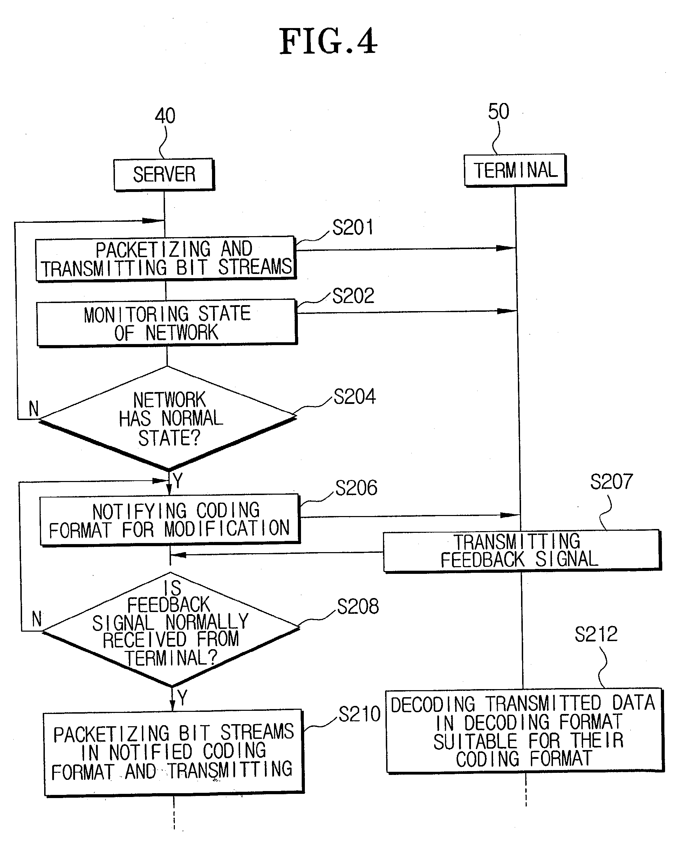

Figure 4 is a flowchart illustrating a second packet transmission method according to the present invention.

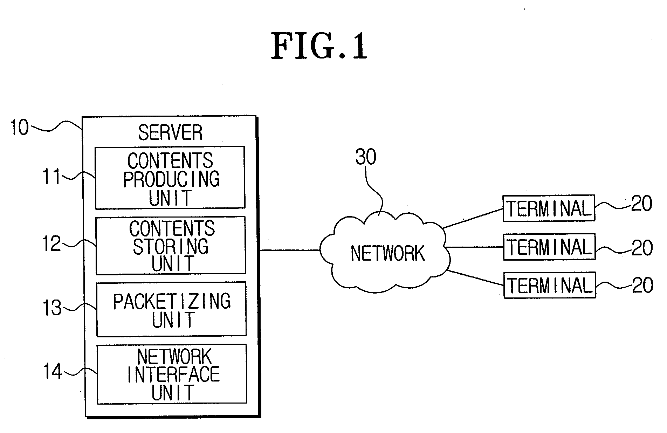

Referring to Figure 1, a server 10 transmits data streams to terminals 20 through a network 30 using RTSP (real time streaming protocol). The server 10 includes a content producing unit 11, a content storing unit 12, a packetizing unit 13 and a network interface unit 14.

The content producing unit 11 encodes multimedia data using an encoder (not shown) for the multimedia streaming service. The multimedia data can be encoded using a compression method such as MPEG-4.

The content storing unit 12 stores bit streams compressed by the content producing unit 11. The network interface unit 14 transmits the data to the network 30 and receives data from the terminals 20.

The packetizing unit 13 packetizes the bit streams using a predetermined coding format. In the case of MPEG-4, the coding format is divided into a coding subformats to code one general frame into a whole and a coding sub-format using a data partitioning method.

When the server 10 is connected to a terminal 20, if the terminal 20 transmits a describe command to the server 10, the server 10 transmits content metadata, such as the coding formats and playback time of the content to the terminal 20. Accordingly, when the state of the network 30 is changed, the terminal 20 adaptively selects a coding format according to the state of the network 30 and requests the selected coding format form the server 10. The packetizing unit 13 packetizes the bit steams in the coding format requested by the terminal 20.

The transmission process will now be described in more detail.

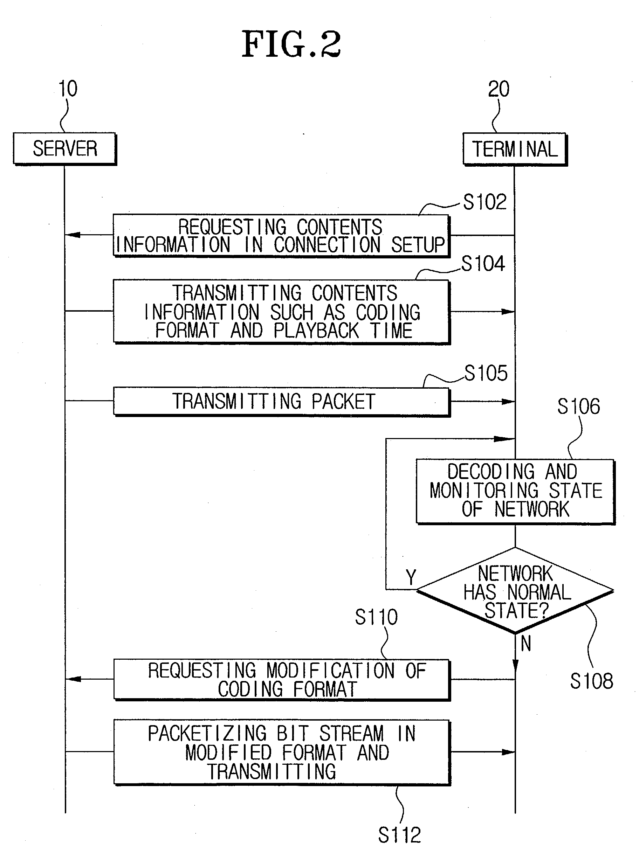

Referring to Figure 2, at operation S102, when the terminal 20 is connected to the server 10, the terminal 20 transmits a describe command to the server 10 to obtain the content metadata. At operation S104, the server 10 transmits the content metadata such as the coding formats and the playback time of the content to the terminal 20. The server 10 provides or informs of at least two coding formats and the terminal 20 recognizes that the corresponding content can be coded in at least two coding formats.

At operation S105, the server 10 packetizes and transmits the bit streams in a general coding format to the terminal 20. At operation S106, the terminal 20 decodes the transmitted data and monitors the state of the network 30. If RTP packets are not being received normally from the server 10 to the terminal 20 and the packet transmission loss is increased, the network 30 is deemed to be in an abnormal state and, if the RTP packets are being received normally, the network 30 is deemed to be in a normal state.

In response to detecting an abnormal state of the network 30, at operation S108, the terminal 20 requests the server 10 to modify the coding format into a resilient packet coding format which is more tolerant of packet loss, at operation S110. At operation S112, the server 10 changes the coding format into the resilient packet coding format, packetizes the bit streams in the changed format, and transmits the packetized bit streams, i.e. the multimedia streams, to the corresponding terminals 20.

On the other hand, if the network status is normal, the method goes to operation S106 to decode the transmitted data and monitors the state of the network 30. If the network state is normal, at operation S108, the terminal 20 requests the server 10 to change the coding format to the previous coding format, at operation S110, and, at operation S112, the server 10 packetizes and transmits the bit streams in the previous coding format.

A second embodiment of the present invention will now be described.

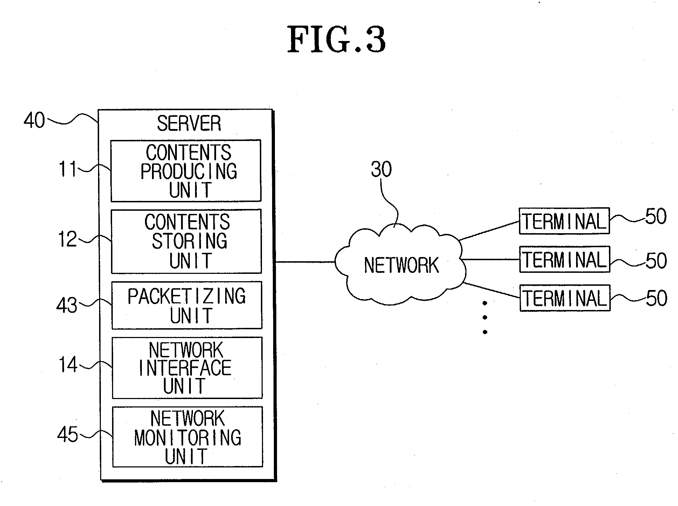

In Figure 3, the same drawing reference numerals are used for the same elements as in Figure 1 and, therefore, explanations thereof are omitted.

Referring to Figure 3, a server 40 includes a content producing unit 11, a content storing unit 12, a packetizing unit 43, a network interface unit 14 and a network monitoring unit 45.

The packetizing unit 43 packetizes bit streams in a predetermined coding format. The coding format can be modified or changed according to the state of the network 30. When feedback between terminal 50 and the server 40 is delayed, the network monitoring unit 45 detects the abnormal state of the network 30 due to an increase in packet loss and informs or flags the packetizing unit 43 of the abnormal state of the network 30.

When informed of the abnormal state of the network 30 by the network monitoring unit 45, the packetizing unit 43 modifies the coding format and packetizes the bit streams in the modified coding format. The packetizing unit 43 informs the terminal 50 of the coding format to confirm that the terminal 50 can decode data in the modified format.

When receiving an OK response signal for the coding format from the terminal 50, the packetizing unit 43 recognizes that the coding format can be decoded in the terminal 50, and packetizes and transmits the bit streams in a new coding format, for example, a resilient packet coding format. When the network 30 is in the normal state, the packetizing unit 43 generates and transmits the packets in the previous coding format.

The transmission process will now be described in more detail.

At operation S201, the server 40 packetizes and transmits the bit stream in the general coding format to a terminal 50. In addition, at operation S202, the server 40 monitors the state of the network 30 connected to the terminal 50. If the network 30 is deemed to have the abnormal state, at operation S204, the server 40 notifies the terminal 50 of a new coding format, at operation S206. At operation S207, the terminal 50 transmits a feedback signal in response to the notification signal from the server 40.

If an OK response signal is received from the terminal 50, at operation S208, the server 40 recognizes that the corresponding coding format can be decoded in the terminal 50, at operation S210, and packetizes and transmits the bit streams in the notified coding format. Thereafter, at operation S212, the terminal 50 decodes the transmitted data in a suitable decoding format.

In addition, at operation S202, the server 40 monitors the state of the network 30. If the network state is determined to be abnormal, the server 40 goes to operation S201 to packetize the bit streams in the previous coding format, at operation S204. On the other hand, at operation S208, when the server 40 does not receive, or does receive but abnormally receive the response signal from the terminal 50, the server 40 goes to operation S206 to re-notify the proposed modified coding format to the terminal 50, or goes to operation S201 to packetize the bit streams in the previous coding format.

Modifications of the coding format will now be explained in detail with reference to video data.

In the case where MPEG-4 or H.263 is used as a video data compression format, there are two main coding formats. One format is a bit stream coding, which transforms the respective macro blocks of one frame into a series of bit streams in accordance with a predetermined coding syntax, and the other format is a data partitioning coding which reorders the macro blocks according to header information, a motion vector, or text information by using a data partitioning method.

Because the two coding formats use the same tables, coding can be efficiently performed through the transformation of the packetized payload into bit stream data. As for the motion vector, however, computations for re-definition of values may be required when the coding format changes.

In the case of changing the bit stream coding method that codes one frame into a series of bit streams, to a data partitioning coding that codes by a predetermined packet size, it is the first motion vector of the inner payload of the packet that is required to be re-defined. The first motion vector is required to be re-defined because the first motion vector is the difference between the estimated motion vector and an actual motion vector that is used in the bit stream for coding.

By the same token, it is the first motion vector of the payload that is applied with a different estimation value when the coding format is changed from the bit stream coding format to the data partitioning coding format. In order to deal with such a situation that accompanies the change of coding formats, an actual value that can be identified without requiring estimation thereof, is positioned in a beginning of the inner payload of the packet together with a start macro block number for future use, i.e. for use in the change of coding format. Accordingly, decoding can be efficiently performed.

In addition, when the function of inserting a macro block refresh into a packet of a predetermined length is added to refresh the macro block during the encoding process, it is possible to efficiently handle the packet loss and it is more efficient in the modification of the coding format of the bit streams.

When the coding format changes according to the state of the network 30, the bit streams coded by the above two coding formats are packetized. In other words, packetization is performed such that the packet to be transmitted includes a field that indicates by which coding format an associated inner payload has been coded. As for the coding formats so indicated, as described above, there is the bit stream coding format which generates bit streams of the sequential macro blocks without using data partitioning, and the data partitioning coding format which generates bit streams re-ordered by the data partitioning. Also, in order to effectively deal with the packet loss problem of the data partitioning coding, whether the header region is a region that was partitioned by the data partitioning, or a text region that includes a coefficient value may be described.

In other words, as the server monitors the state of the network 30, the coding format is changed in accordance with the state of the network 30. Accordingly, changed coding format is applied in the packetizing process, and the packets generated by such changed coding format are transmitted to the terminal. A receiving terminal may recognize the changed coding format of the received packets either from notification by the server, or by decoding the descriptor field that describes the coding format of the received packets. Accordingly, the receiving terminal can decode the received packets in accordance with the changed coding format. Through such depacketizing process and the decoding of the bit stream in accordance with the coding format, the receiving terminal can recover the image.

By the coding and packet transmitting apparatus and method thereof for multimedia streaming service that applies a change of coding format into a packetizing process according to an aspect of the present invention, when identical contents stored in a server are transmitted to a plurality of terminals, the data packets, which are coded in different coding formats according to a state of a network connected to the respective terminals, are transmitted. As a result, the current content can be generated as if a plurality of contents are stored according to the coding formats. In addition, storage efficiency is considerably improved.

While the invention has been shown and described with reference to certain preferred aspects thereof, it will be understood by those skilled in the art that various changes in form and details may be made therein without departing from the spirit and scope of the invention as defined by the appended claims.

The foregoing aspects and advantages are merely exemplary. The present teaching can be readily applied to other types of apparatuses. The description of the present invention is intended to be illustrative. Many alternatives, modifications, and variations will be apparent to those skilled in the art.

## Claims

1. A method of transmitting a multimedia stream, the method comprising packetizing encoded multimedia data and transmitting the packetized encoded multimedia data over a network, **characterised by** determining the quality of a path through the network and performing said packetizing using different coding formats selected in dependence on the determined path quality.

2. A multimedia streaming apparatus comprising packetizing means (13; 43) for packetizing encoded multimedia data and transmitting means (14) for transmitting the packetized encoded multimedia data over a network, **characterised by** the packetizing means (13; 43) being responsive to a path quality signal to select different coding formats in dependence on path quality.

3. An apparatus to transmit a packet to provide a multimedia streaming service to one or more terminals connected through a network, comprising:
a content producing unit encoding and compressing multimedia data into bit streams;
a content storing unit storing the bit streams compressed by the content producing unit; and
a packetizing unit packetizing the bit streams stored in the content storing unit in a predetermined coding format, and packetizing the bit streams in a different coding format when a state of the network changes.

4. The apparatus according to claim 3, wherein, when the network has an abnormal state, the packetizing unit packetizes the bit streams in a packet resilient coding format to be resilient from a packet loss.

5. The apparatus according to claim 3, wherein the state of the network is notified from the one or more terminals.

6. An apparatus to transmit a packet to provide a multimedia streaming service to one or more terminals connected through a network, comprising:
a content producing unit encoding and compressing multimedia data into bit streams;
a content storing unit storing the bit streams compressed by the content producing unit;
a network monitoring unit notifying changes of a state of the network connected to the one or more terminals; and
a packetizing unit packetizing the bit streams stored in the content storing unit in a predetermined coding format, and packetizing the bit streams in a different coding format corresponding to the state of the network.

7. The apparatus according to claim 6, wherein, when the network has an abnormal state, the packetizing unit packetizes the bit streams in a packet resilient coding format to be resilient from a packet loss.

8. The apparatus according to claim 6, wherein, when the packetizing unit modifies the coding format into a different coding format, the packetizing unit confirms whether the coding format enables the bit streams to be decoded in the one or more terminals, and when the coding format enables data to be decoded in the one or more terminals, the packetizing unit generates and transmits packets in the modified coding format.

9. A method of transmitting a packet to provide a multimedia streaming service to one or more terminals connected through a network, comprising:
informing the one or more terminals of contents information comprising coding formats and playback time of contents;
receiving a coding request from the one or more terminals to perform a coding process in one of the coding formats according to a state of the network; and
packetizing and transmitting bit streams in the requested coding format to the one or more terminals.

10. The method according to claim 9, wherein, when the network has an abnormal state in the receiving of the coding request, the coding format is modified into a packet resilient coding format to be resilient from a packet loss.

11. A method of transmitting a packet to provide a multimedia streaming service to one or more terminals connected through a network, comprising:
packetizing bit streams in a different coding format when a state of the network connected to the one or more terminals changes, and confirming whether the different coding format is a coding format to enable the bit streams to be decoded in the one or more terminals; and
generating and transmitting packets in the different coding format when the different coding format enables the data to be decoded in the one or more terminals.

12. The method according to claim 11, wherein, when the network has an abnormal state, the different coding format is a packet resilient coding format to be resilient from a packet loss.

13. A packet transmitting method for providing a multimedia streaming service to one or more terminals connected through a network, comprising:
packetizing a packet to be transmitted having a descriptor field that describes a coding format of an inner payload, generating the packet according to another coding format; and
transmitting the generated packet of another coding format to the one or more terminals.

14. A packet receiving method for providing a multimedia streaming service to one or more terminals connected through a network, comprising:
receiving a packet having a descriptor field indicating a coding format of an inner payload, wherein the received packet is packetized in the another coding format; and decoding where the packet in the another coding format is de-packetized.

15. The packet receiving method of claim 14, wherein the another coding format is a coding format without a data partitioning to deal with packet loss, or a coding format applied with the data partitioning to deal with the packet loss.

16. The packet receiving method of claim 15, wherein, when the another coding format is of data division type,
the field describes as to whether the packet contains one of header region and text region.

17. An apparatus to transmit a packet for a multimedia streaming service to improve storage efficiency and transmission efficiency of one or more terminals connected to a server through a network, comprising:
a packetizing unit modifying a coding format of a packetizing process according to a state of the network; and
a server providing the multimedia streaming service access to Internet or wireless Internet and transmitting contents having same image quality to the one or more terminals.

18. The apparatus according to claim 17, wherein the server transmits bit streams to the one or more terminals through the network using a real time streaming protocol (RTSP).

19. The apparatus according to claim 18, wherein the server comprises:
a content producing unit encoding multimedia data using a standardized compression method for the multimedia streaming service,
a content storing unit storing bit streams compressed by the content producing unit, and
a network interface unit transmitting the bit streams to network media or receiving the bit streams from the one or more terminals in the network.

20. The apparatus according to claim 17, wherein the packetizing unit packetizes bit streams in a predetermined coding format.

21. The apparatus according to claim 20, wherein the coding format is divided into a coding format to code one frame into a whole and a coding format using a data partitioning method.

22. The apparatus according to claim 21, wherein when the server is connected to the one or more terminals and the one or more terminals transmit a describe command to the server, the server transmits contents information comprising the coding formats and a playback time of the contents to the one or more terminals, where the one or more terminals adaptively select the coding format according to the state of the network and requests bit streams in the coding format to the server.

23. The apparatus according to claim 18, wherein the server comprises:
a content producing unit encoding multimedia data using a standardized compression method for the multimedia streaming service;
a content storing unit storing bit streams compressed by the content producing unit;
a network interface unit transmitting the bit streams to network media or receiving the bit streams from the one or more terminals in the network; and
a network monitoring unit monitoring an abnormal state of the network due to an increase of packet loss and informing the packetizing unit of the abnormal state of the network .

24. The apparatus according to claim 23, wherein when recognizing the abnormal state of the network by the network monitoring unit, the packetizing unit modifies the coding format and packetizes the bit streams in the modified coding format.

25. The apparatus according to claim 24, wherein the packetizing unit notifies the modified coding format to the one or more terminals to confirm whether the modified coding format enables the bit streams to be decoded in the one or more terminals.

26. The apparatus according to claim 25, wherein when normally receiving a response signal for the modified coding format from the one or more terminals, the packetizing unit recognizes that the modified coding format enables the bit streams to be decoded in the one or more terminals, and packetizes and transmits the bit streams in the modified coding format.

27. The apparatus according to claim 26, wherein the modified coding format comprises a packet resilient coding format.

28. The apparatus according to claim 27, wherein the contents information comprises coding formats and a playback time of the contents .

29. The apparatus according to claim 28, wherein when the network has the normal state, the packetizing unit generates and transmits the packets in a previous coding format.

30. A method of transmitting a packet to provide a multimedia streaming service to one or more terminals connected to a server through a network, comprising:
transmitting a describe command from the one or more terminals to the server to obtain contents information;
transmitting the contents information from the server to the one or more terminals;
packetizing and transmitting bit streams in a coding format from the server to the one or more terminals;
decoding the bit streams in a format corresponding to the coding format; modifying the coding format into a packet resilient coding format to be resilient from a packet loss;
packetizing the bit streams in the modified coding format; and
transmitting the packetized bit streams to the one or more terminals.

31. The method according to claim 30, further comprising:
determining an abnormal state of the network when RTP packets are not normally transmitted from the server to the one or more terminals and the packet loss increases, and
determining a normal state of the network when the RTP packets are normally transmitted.
